# EUROPÄISCHE PATENTSCHRIFT

(11) **EP 2 985 446 B1**
(45) Veröffentlichungstag und Bekanntmachung des Hinweises auf die Patenterteilung: **06.02.2019**
(21) Anmeldenummer: 15174286.3
(22) Anmeldetag: 29.06.2015
(51) Int. Cl.: F02M 57/00, F02M 51/00, G01L 23/10, F02M 65/00

(54) **INJEKTOR**
INJECTOR
INJECTEUR

(30) Priorität: 12.08.2014 DE 102014215977
(43) Veröffentlichungstag der Anmeldung: 17.02.2016
(73) Patentinhaber: ROBERT BOSCH GMBH, 70442 Stuttgart (DE)
(72) Erfinder: Kreschel, Henning, 71640 Ludwigsburg (DE); Stieber, Marco, 71665 Vaihingen An Der Enz (DE); Haug, Stefan, 71111 Waldenbuch (DE); Fischer, Fabian, 70176 Stuttgart (DE); Schnaufer, Axel, 70435 Stuttgart (DE); Forke, Martin, 70499 Stuttgart (DE)

(56) Entgegenhaltungen:
- EP-A1- 2 679 972
- DE-A1- 3 807 196
- DE-A1- 19 813 756
- US-A- 3 603 152
- US-A- 4 257 260
- US-A- 4 425 800
- US-A1- 2009 038 589
- US-A1- 2010 050 991

## Beschreibung

Die Erfindung betrifft einen Injektor aufweisend einen Injektorkörper sowie einen Düsenkörper mit einer eine Düsennadel aufnehmenden Bohrung, wobei die Düsennadel in der Bohrung translatorisch bewegbar ist, und eine mit einem Düsenkörpersitz zusammenwirkende Düsennadelspitze aufweist, wobei dem Düsenkörpersitz zumindest eine Düsenöffnung zugeordnet ist, die gesteuert von der Düsennadel mit einer Hochdruckleitung für ein Medium in dem Injektorkörper verbunden ist, und wobei ein piezokeramischer Sensor zur Aufnahme eines Druckverlaufs des Mediums vorgesehen ist.

### Stand der Technik

Eine derartiger Injektorkörper ist aus der WO 99/32783 bekannt. Dieser Injektorkörper weist einen Düsenkörper mit einer in einer Bohrung geführten Düsennadel auf, wobei die Düsennadel mit einer Düsenspitze in einem Düsenkörpersitz eingreift, und wobei die Düsennadel bei einer Öffnungsbewegung eine Düsenöffnung freigibt, durch die ein durch eine Hochdruckleitung in dem Injektorkörper geführtes Medium gespritzt wird. In dem Injektorkörper ist ein Ventil angeordnet, das einen Hochdruckraum für das Medium in eine Niederdruckleitung entlasten kann. Bei einer Entlastung des Hochdruckraums wird die Düsennadel axial zur Freigabe der Düsenöffnung verstellt. Im Bereich des Ventils ist ein ringförmiger Sensor zur Aufnahme eines Druckverlaufs des Mediums Weitere Injektoren mit Drucksensoren sind bekannt aus der US2009038589 A1 und der DE19813756 A1.

Der Erfindung liegt die Aufgabe zugrunde, einen Injektorkörper mit einem Sensor zur Bestimmung eines Druckverlaufs eines durch den Injektorkörper geführten Mediums anzugeben, der hinsichtlich seiner Funktion verbessert ist.

Diese Aufgabe wird dadurch gelöst, dass der Sensor zu der Hochdruckleitung ausgerichtet ist. Die Ausrichtung des Sensors zu der Hochdruckleitung ermöglicht eine präzise Aufnahme des Druckverlaufs des durch die Hochdruckleitung strömenden Mediums.

Erfindungsgemäß ist der Sensor in eine Ausnehmung in dem Injektorkörper eingelassen. Die Anordnung des Sensors in der Ausnehmung ermöglicht eine geschützte Anordnung des Sensors und zudem eine präzise Ausrichtung zu der Hochdruckleitung beispielsweise gegenüber einem Sensor, der außen an dem Injektorkörper angeklebt wird.

Erfindungsgemäß ist der Sensor auf Druck vorgespannt. Diese Ausgestaltung ist besonders vorteilhaft, da durch die Vorspannung die mechanische Belastung auf den keramischen Werkstoff des Sensors angepasst werden, so dass diese eine geringere Zugspannung erfährt, was sich positiv auf die Haltbarkeit und damit die Funktion des Sensors auswirkt.

Erfindungsgemäß ist der Sensor zwischen einer Bodenwand der Ausnehmung und einer in die Ausnehmung eingeschraubten Spannschraube angeordnet. Dadurch ist der Sensor einstellbar so auf Druck vorgespannt, dass dieser axial mit einer in der Hochdruckleitung herrschenden Druckschwankung belastet wird und entsprechend des Druckverlaufs in der Hochdruckleitung ein Signal liefert, welches zur Detektion charakteristischer Betriebszustände, insbesondere eines Öffnungsvorgangs und eines Schließvorgangs der Düsennadel genutzt werden kann. Durch die Verspannung des Sensors zwischen der Bodenwand und der Spannschraube entfällt ein als kritisch zu bewertender Kleber, mit dem der Sensor nach einer herkömmlichen Befestigungsmethode an dem Injektorkörper befestigt ist. Hierbei ist zu berücksichtigen, dass bei einem herkömmlich angeklebten Sensor bei der Übertragung des Druckes einer Hochdruckleitung Zugspannungen in dem Werkstoff des Sensors eingeleitet werden. Je nach der Größe der Zugspannungen kann der Sensor beschädigt und schlimmstenfalls zerstört werden. Durch eine einseitige Klebung wird die Deformation des Injektorkörpers durch die Druckänderung ausschließlich in Form von Schubspannungen in den Sensor eingeleitet. Dadurch entsteht über die Dicke des Sensors ein inhomogener Dehnungszustand. Damit wird das Potential des Sensors zur Signalmessung nur teilweise ausgenutzt. Weiterhin ist die Dauerhaltbarkeit von üblichem Kleber als kritisch gegenüber einer typischen Nutzungszeit des Injektorkörpers von 15 Jahren bei Temperaturen zwischen -40° bis +160° als kritisch zu bewerten. Dagegen lässt sich erfindungsgemäß durch eine geschickte Wahl der Wärmeausdehnungskoeffizienten und der beteiligten Längen der jeweiligen Komponenten der Einfluss durch Betriebstemperaturen und Umgebungstemperaturen größtenteils ausgleichen, was ebenfalls die Robustheit und somit die Funktion des Systems weiter erhöht.
In Weiterbildung der Erfindung ist die Normale der als Membran wirkenden Bodenwand zumindest angenähert rechtwinklig zu der Hochdruckleitung ausgerichtet. Dabei kann die Dicke der Bodenwand zumindest in einem zentralen Bereich gegenüber der Hochdruckleitung auf den in der Hochdruckleitung herrschenden Druck so ausgerichtet sein, dass durch die Druckschwankungen in der Hochdruckleitung eine reversible Deformation beziehungsweise nach außen gerichtete Wölbung der Bodenwand erfolgt.

Erfindungsgemäß ist zwischen der Bodenwand und dem Sensor ein Druckverteiler angeordnet. Durch den Einsatz des Druckverteilers wird ein größerer Stirnflächenhub genutzt, wobei der Druckverteiler die anliegende Verformung vorzugsweise über eine Elektrode auf den Sensor überträgt. Der Druckverteiler kann in kegeliger oder zylindrischer Form ausgebildet sein. Die Gegenkraft für den Sensor wird über die Spannschraube und über eine zweite Elektrode auf den Sensor aufgebracht, so dass der Sensor bei einer Verformung der Bodenwand gestaucht wird. Die Spannschraube dient dabei gleichzeitig für die Einstellung der auf den Sensor und die damit gegebenenfalls zusammenwirkenden weiteren Bauteile wirkenden Vorspannung.
In weiterer Ausgestaltung der Erfindung ist zwischen dem Sensor und der Spannschraube ein Isolationskörper angeordnet. Diese Anordnung eines Isolationskörpers hängt von der Auswahl der Werkstoffe für den Druckverteiler und die Spannschraube ab, da für eine elektrische Isolation des Sensors gesorgt werden muss, um einen Kurzschluss zu vermeiden. Der Isolator kann beispielsweise aus einem keramischen Werkstoff bestehen. Denkbar ist ein rein keramischer Werkstoff für den Druckverteiler, der aber auch aus Metall, beispielsweise einem beliebigen Stahl, gefertigt sein kann und der dann mit einer isolierenden Keramikfolie zu einer Elektrode des Sensors hin abgeschirmt ist. Ein ähnliches Prinzip gilt auch für eine aus Stahl gefertigte Spannschraube gegenüber einer zugewandten zweiten Elektrode des Sensors. Auch eine hierzwischen angeordnete Isolationsschicht kann eine Folie oder ein sonstiges dickeres Bauelement sein. Durch eine gezielte Anpassung der Bauteildicken und deren Wärmeausdehnungskoeffizienten in axialer Richtung kann in einem großen Temperaturbereich die Vorspannung relativ konstant gehalten werden. In axialer Richtung weist der piezokeramische Sensor oft einen negativen Temperaturkoeffizienten auf, so dass mindestens ein Element einen größeren Ausdehnungskoeffizienten benötigt, als der Stahl des Injektorkörpers. Die Effektivität des Sensors und der damit zusammenwirkenden Bauteile kann durch steifere Komponenten erhöht werden. Auch sind eine ausreichende Einschraubtiefe und eine fest und steif verankerte Spannschraube als Wiederlager für den Sensor für eine zuverlässige Funktion des Systems zielführend.

In Weiterbildung der Erfindung ist in den Injektorkörper ein Schlitz zur Durchführung einer elektrischen Kontaktierung mit dem Sensor eingelassen. Der Schlitz schließt sich bevorzugt seitlich nach außen an den Injektorkörper im Bereich der Ausnehmung an. Alternativ kann in weiterer Ausgestaltung der Erfindung in die Spannschraube ein Loch zur Durchführung einer elektrischen Kontaktierung mit dem Sensor eingelassen sein. Dadurch kann ein seitlicher Schlitz entfallen.

Als Montagehilfe kann ein zumindest den Sensor, die Elektroden und den Druckverteiler umfassender Käfig vorgesehen sein, der beispielsweise aus einem Kunststoffwerkstoff gefertigt ist.

In Weiterbildung der Erfindung ist der Injektor ein Kraftstoffinjektor und das Medium Kraftstoff. Wenn auch der Gegenstand der vorliegenden Erfindung bei einem beliebigen Injektor angewendet werden kann, ist die bevorzugte Anwendung bei einem Kraftstoffinjektor gegeben. Ein solcher Kraftstoffinjektor ist Teil eines Kraftstoffeinspritzsystems, mit dem Kraftstoff, beispielsweise Dieselkraftstoff, in einen Brennraum einer Brennkraftmaschine eingespritzt wird.

Weitere vorteilhafte Ausgestaltungen der Erfindung sind der Zeichnungsbeschreibung zu entnehmen, in der ein in den Figuren dargestelltes Ausführungsbeispiel der Erfindung näher beschrieben ist.

Es zeigen:
- Figur 1: einen teilweisen Längsschnitt durch einen Injektor mit einer Darstellung einer Positionierung eines Sensorpakets in einer in einen Injektorkörper des Injektors eingelassenen Ausnehmung unterhalb und in direkter Nähe zu einer Aktorkabelbohrung für einen Aktor,
- Figur 2: einen Querschnitt durch einen Injektorkörper mit einer Darstellung eines in eine Ausnehmung in dem Injektorkörper eingesetzten Sensorpakets und
- Figur 3: einen Schnitt A-A gemäß Figur 2.

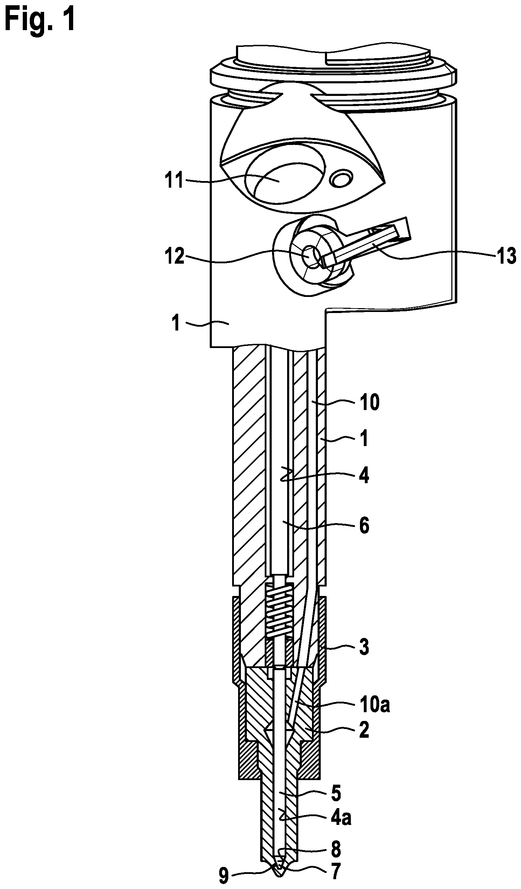

Der in Figur 1 dargestellte Injektor ist ein Kraftstoffinjektor, mit dem unter Druck stehender Kraftstoff, der beispielsweise einem Hochdruckspeicher eines Common-Rail-Einspritzsystems entnommen wird, in einen Brennraum einer Brennkraftmaschine, an dem das Einspritzsystem verbaut ist, eingespritzt wird. Dabei ist der Kraftstoff insbesondere Dieselkraftstoff und die Brennkraftmaschine eine selbstzündende Brennkraftmaschine. Der Kraftstoffinjektor weist einen Injektorkörper 1 auf, der mit einem Düsenkörper 2 mittels einer Überwurfmutter 3 verschraubt ist. In dem Injektorkörper 1 und dem Düsenkörper 2 ist eine Bohrung 4, 4a eingearbeitet, in dem eine Düsennadel 5 und eine mit der Düsennadel 5 zusammenwirkende Betätigungsstange 6 axial beweglich angeordnet sind. In einer Schließstellung der Düsennadel 5 wirkt eine Düsennadelspitze 7 der Düsennadel 5 mit einem Düsenkörpersitz 8 zusammen und verschließt zumindest eine Düsenöffnung 9, die in dem Düsenkörper 2 unterhalb des Düsenkörpersitzes 8 angeordnet ist.

In einer Öffnungsstellung der Düsennadel 5 befindet sich die Düsennadelspitze 7 in einer beabstandeten Stellung zu dem Düsenkörpersitz 8 und gibt dann eine Strömungsverbindung durch eine in den Injektorkörper 1 und den Düsenkörper 2 eingelassene Hochdruckleitung 10, 10a zu der zumindest einen Düsenöffnung 9 frei. In dieser Stellung wird beispielsweise aus dem Hochdruckspeicher in die Hochdruckleitung 10, 10a eingebrachter Kraftstoff durch die zumindest eine Düsenöffnung 9 in den zugeordneten Brennraum der Brennkraftmaschine eingespritzt.

Die Düsennadel 5 wird über die Betätigungsstange 6 von einem in dem Injektorkörper 1 eingebauten Aktor direkt oder indirekt in die Öffnungsstellung und die Schließstellung verstellt, wobei zur Herstellung einer elektrischen Verbindung zwischen dem Aktor und einem Steuergerät eine Steuerleitung vorhanden ist, die durch eine Aktorkabelbohrung 11 durch den Injektorkörper 1 geführt ist. Unterhalb der Aktorkabelbohrung 11 ist eine Ausnehmung 12 mit einem seitlichen Schlitz 13 angeordnet, wobei in die Ausnehmung 12 ein Sensorpaket einsetzbar ist und der Schlitz 13 zur Durchführung einer elektrischen Kontaktierung des Sensorpakets dient.

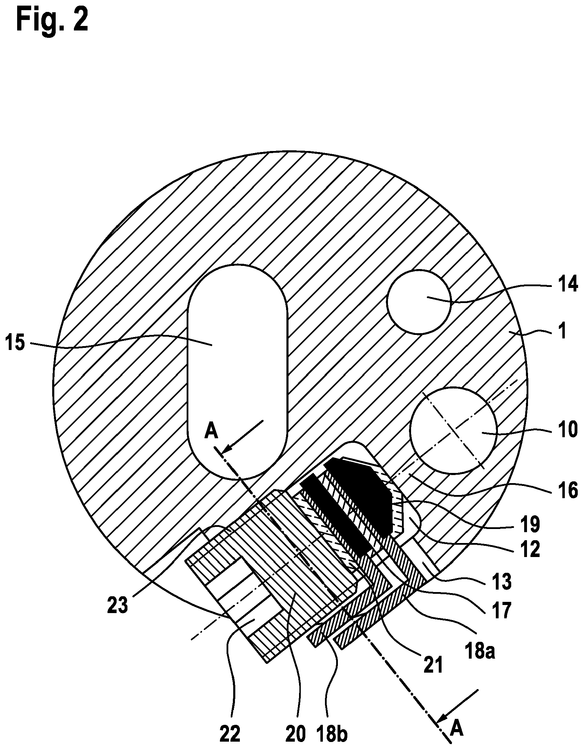

Der in Figur 2 gezeigte Querschnitt durch den Injektorkörper 1 zeigt die Hochdruckleitung 10 und eine daneben liegende Rücklaufleitung 14. Zentral in den Injektorkörper 1 ist eine Aktorraumausnehmung 15 zur Aufnahme des Aktors angeordnet. Die Ausnehmung 12 ist zumindest angenähert rechtwinklig zu der Hochdruckleitung 10 in den Injektorkörper 1 eingelassen und zwischen der Hochdruckleitung 10 und der Ausnehmung 12 ist eine eine Membran bildende Bodenwand 16 in dem Injektorkörper 1 gebildet.

Durch Druckpulsationen in der Hochdruckleitung 10, die in Zusammenhang mit der Öffnungsbewegung und der Schließbewegung der Düsennadel 5 gegenüber dem Düsenkörpersitz 8 stehen, wird die Bodenwand 16 durch eine abgestimmte reduzierte Wandstärke reversibel verformt beziehungsweise gibt nach und bäumt sich in Richtung zu der Ausnehmung 12 aus. Diese Verformung beziehungsweise Ausbäumung, die mittig der Bodenwand 16 am größten ist, wird von einem in die Ausnehmung 12 eingesetzten piezokeramischen Sensor 17 aufgenommen. Der Sensor 17 wirkt mit einer ersten Elektrode 18a und einer zweiten Elektrode 18b zusammen, die durch eine Verformung des Sensors 17 hervorgerufene Spannungssignale des piezokeramischen Sensors 17übertragen. Die von der ersten Elektrode 18a und der zweiten Elektrode 18b aufgenommenen Spannungssignale werden direkt oder über eine Kontaktierung durch den Schlitz 13 nach außen geführt. Zwischen der ersten Elektrode 18a und der Bodenwand 16 ist zur Nutzung des größeren Stirnflächenhubs ein Druckverteiler 19 angeordnet, der die auf die Bodenwand 16 ausgeübte Verformung auf den Sensor 17 überträgt. Der Druckverteiler 19 kann eine kegelige oder zylindrische Form aufweisen.

Um durch die Verformung den Sensor 17 wirkungsvoll und schädigungsfrei zu belasten beziehungsweise zu stauchen und zu entlasten, ist eine Spannschraube 20 vorgesehen, die in ein in die Ausnehmung 12 eingelassenes Gewinde 23 einschraubbar ist, und die den Sensor 17 auf einen definierten Wert vorspannt. Durch die Vorspannung der Spannschraube 20 kann die mechanische Belastung auf den piezokeramischen Werkstoff des Sensors 17 angepasst beziehungsweise eingestellt werden, so dass dieser eine geringere Zugspannung erfährt, was sich positiv auf dessen Haltbarkeit auswirkt. Zusätzlich entfällt der als zumindest dauerhaltbarkritisch anzusehende Kleber, mit dem der Sensor 17 nach einer herkömmlichen Befestigungsmethode an dem Injektorkörper 1 befestigt ist. Durch eine abgestimmte Wahl der Wärmeausdehnungskoeffizienten und der beteiligten Längen der jeweiligen Komponenten lässt sich der Einfluss durch Betriebstemperaturen und Umgebungstemperaturen größtenteils ausgleichen, was die Robustheit des Systems weiter erhöht. Um eine Isolation der zweiten Elektrode 18b gegenüber der Spannschraube 20 zu gewährleisten, ist ein Isolationskörper 21, der beispielsweise aus einem keramischen Werkstoff besteht und als Folie oder dickeres Bauelement ausgestaltet ist, zwischen der zweiten Elektrode 18b und der beispielsweise aus einem metallischen Werkstoff gefertigten Spannschraube 20 angeordnet. Für den Fall, dass die Spannschraube 20 und/oder der Druckverteiler 19 aus einem isolierenden Werkstoff (beispielsweise ebenfalls einem keramischen Werkstoff) gefertigt sind, kann der Isolationskörper 21 entfallen. Um eine problemlose Montage zu gewährleisten, kann ein Käfig vorgesehen sein, der den Druckverteiler 19, die erste Elektrode 18a, den Sensor 17, die zweite Elektrode 18b und den Isolationskörper 21 umfasst. Weiterhin weist die Spannschraube 20 eine Aufnahme 22 für ein Werkzeug auf, mit dem die Spannschraube 20 gedreht werden kann. Schließlich ist die Einschraubtiefe der Spannschraube 20 als Widerlager für den Sensor 17 ausreichend bemessen und die Spannschraube 20 fest und steif in der Ausnehmung 12 verankert, damit eine zuverlässige Funktion des Systems über dessen gesamte Lebensdauer gewährleistet ist.

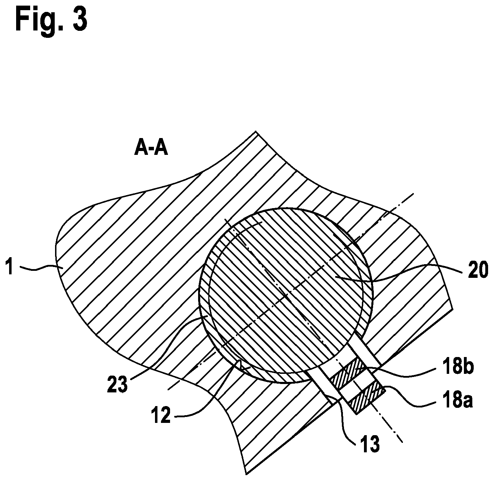

Der Schnitt A-A gemäß Figur 3 durch die Ausnehmung 12 und die Spannschraube 20 zeigt die Anordnung des Schlitzes 13 und der ersten Elektrode 18a und der zweiten Elektrode 18b in Bezug zu dem Injektorkörper 1.

## Patentansprüche

1. Injektor aufweisend einen Injektorkörper (1) sowie einen Düsenkörper (2) mit einer eine Düsennadel (5) aufnehmenden Bohrung (4a), wobei die Düsennadel (5) in der Bohrung (4a) translatorisch bewegbar ist und mit einem Düsenkörpersitz (8) zusammenwirkt, wobei dem Düsenkörpersitz (8) zumindest eine Düsenöffnung (9) zugeordnet ist, die gesteuert von der Düsennadel (5) mit einer Hochdruckleitung (10, 10a) für ein Medium in dem Injektorkörper (1) und dem Düsenkörper (2) verbindbar ist, und wobei ein piezokeramischer Sensor (17) zur Aufnahme eines Druckverlaufs des Mediums vorgesehen ist, wobei der Sensor (17) in eine Ausnehmung (12) in dem Injektorkörper (1) eingesetzt und zu der Hochdruckleitung (10) ausgerichtet ist und der Sensor (17) auf Druck vorgespannt ist und zwischen einer an die Hochdruckleitung (10) angrenzenden Bodenwand (16) der Ausnehmung (12) und einer in die Ausnehmung (12) eingebauten Spannschraube (20) angeordnet ist,
**dadurch gekennzeichnet, dass**
zwischen der Bodenwand (16) und dem Sensor (17) ein Druckverteiler (19) angeordnet ist.

2. Injektor nach Anspruch 1,
**dadurch gekennzeichnet, dass** die Normale der als Membran wirkenden Bodenwand (16) zumindest angenähert rechtwinklig zu der Hochdruckleitung (10, 10a) ausgerichtet ist.

3. Injektor nach Anspruch 1,
**dadurch gekennzeichnet, dass** zwischen dem Sensor (17) und der Spannschraube (20) ein Isolationskörper (21) angeordnet ist.

4. Injektor nach einem der Ansprüche 1 bis 3,
**dadurch gekennzeichnet, dass** in den Injektorkörper (1) ein Schlitz (13) zur Durchführung einer elektrischen Kontaktierung mit dem Sensor (17) eingelassen ist.

5. Injektor nach einem der Ansprüche 1 bis 3,
**dadurch gekennzeichnet, dass** in die Spannschraube (20) ein Loch zur Durchführung einer elektrischen Kontaktierung mit dem Sensor (17) eingelassen ist.

6. Injektor nach einem der vorherigen Ansprüche,
**dadurch gekennzeichnet, dass** der Injektor ein Kraftstoffinjektor ist und dass das Medium Kraftstoff ist.

## Claims

1. Injector having an injector body (1) and having a nozzle body (2) with a bore (4a) which receives a nozzle needle (5), wherein the nozzle needle (5) is movable in translational fashion in the bore (4a) and interacts with a nozzle body seat (8), wherein the nozzle body seat (8) is assigned at least one nozzle opening (9) which is connectable, in a manner controlled by the nozzle needle (5), to a high-pressure line (10, 10a) for a medium in the injector body (1) and in the nozzle body (2), and wherein a piezoceramic sensor (17) is provided for recording a pressure profile of the medium, wherein the sensor (17) is inserted into a recess (12) in the injector body (1) and is oriented toward the high-pressure line (10), and in that the sensor (17) is subjected to pressure preloading and is arranged between a base wall (16), adjoining the high-pressure line (10), the recess (12) and a clamping screw (20) installed into the recess (12),
**characterized in that**
a pressure distributor (19) is arranged between the base wall (16) and the sensor (17).

2. Injector according to Claim 1,
**characterized in that** the normal to the base wall (16) which acts as diaphragm is oriented at least approximately at right angles to the high-pressure line (10, 10a).

3. Injector according to Claim 1,
**characterized in that** an insulation body (21) is arranged between the sensor (17) and the clamping screw (20).

4. Injector according to any of Claims 1 to 3,
**characterized in that** a slot (13) for the leadthrough of an electrical contact to the sensor (17) is formed into the injector body (1).

5. Injector according to any of Claims 1 to 3,
**characterized in that** a hole for the leadthrough of an electrical contact to the sensor (17) is formed into the clamping screw (20).

6. Injector according to any of the preceding claims,
**characterized in that** the injector is a fuel injector, and **in that** the medium is fuel.

## Revendications

1. Injecteur présentant un corps d'injecteur (1) ainsi qu'un corps de buse (2) avec un alésage (4a) contenant un pointeau (5), dans lequel le pointeau (5) est déplaçable en translation dans l'alésage (4a) et coopère avec un siège de corps de buse (8), dans lequel au moins un orifice de buse (9) est associé au siège du corps de buse (8), et peut être connecté de façon commandée par le pointeau (5) à une conduite à haute pression (10, 10a) pour un fluide dans le corps d'injecteur (1) et dans le corps de buse (2), et dans lequel il est prévu un capteur piézocéramique (17) destiné à enregistrer une allure de pression du fluide, dans lequel le capteur (17) est inséré dans un évidement (12) dans le corps d'injecteur (1) et est orienté vers la conduite à haute pression (10) et le capteur (17) est précontraint en compression et est disposé entre une paroi de fond (16) de l'évidement (12) adjacente à la conduite à haute pression (10) et une vis de serrage (20) logée dans l'évidement (12), **caractérisé en ce qu'**un répartiteur de pression (19) est disposé entre la paroi de fond (16) et le capteur (17).

2. Injecteur selon la revendication 1, **caractérisé en ce que** la normale à la paroi de fond (16) agissant comme membrane est orientée au moins approximativement à angle droit par rapport à la conduite à haute pression (10, 10a).

3. Injecteur selon la revendication 1, **caractérisé en ce qu'**un corps d'isolation (21) est disposé entre le capteur (17) et la vis de serrage (20).

4. Injecteur selon l'une quelconque des revendications 1 à 3, **caractérisé en ce qu'**une fente (13) est pratiquée dans le corps d'injecteur (1) pour le passage d'un contact électrique avec le capteur (17).

5. Injecteur selon l'une quelconque des revendications 1 à 3, **caractérisé en ce qu'**un trou est pratiqué dans la vis de serrage (20) pour le passage d'un contact électrique avec le capteur (17).

6. Injecteur selon l'une quelconque des revendications précédentes, **caractérisé en ce que** l'injecteur est un injecteur de carburant et **en ce que** le fluide est un carburant.
